# EUROPÄISCHE PATENTSCHRIFT

(11) **EP 3 404 772 B1**
(45) Veröffentlichungstag und Bekanntmachung des Hinweises auf die Patenterteilung: **31.08.2022**
(21) Anmeldenummer: 18182348.5
(22) Anmeldetag: 23.03.2016
(51) Int. Cl.: H01R 4/48, H01R 4/64, H01R 11/03, H02G 3/32, H01R 12/72

(54) **SCHRAUBENLOSE KLEMMVORRICHTUNG FÜR ELEKTRISCHE LEITER**
SCREWLESS CLAMPING DEVICE FOR ELECTRIC CONDUCTORS
DISPOSITIF DE SERRAGE SANS VIS POUR CONDUCTEUR ELECTRIQUE

(30) Priorität: 13.04.2015 DE 102015004660; 06.08.2015 DE 102015010312
(43) Veröffentlichungstag der Anmeldung: 21.11.2018
(62) Teilanmeldung aus: 16161803.8
(73) Patentinhaber: DEHN SE, 92318 Neumarkt i.d. OPf. (DE)
(72) Erfinder: SCHROLLINGER, Andreas, 92355 Velburg (DE); BRAUN, Christian, 92318 Neumarkt (DE); SEGER, Siegfried, 92364 Deining (DE)
(74) Vertreter: Isarpatent

(56) Entgegenhaltungen:
- EP-A1- 2 654 128
- DE-A1- 1 927 764
- DE-A1-102007 005 964
- DE-A1-102010 036 003
- US-A1- 2002 193 018
- US-A1- 2005 109 887

## Beschreibung

Die vorliegende Erfindung betrifft eine schraubenlose Klemmvorrichtung.

Die EP 2 654 128 A1 offenbart eine Befestigungsvorrichtung zu Ausbildung einer elektrischen und/oder mechanischen Erfindung zwischen einer Stromschiene, Montageplatte oder insbesondere leitenden Montagefläche und einem oder mehreren Gegenständen, mit mindestens einer Klammer, die ein Fußteil und zwei Schenkel zur klemmenden Haltung des Gegenstandes umfasst, wobei die Befestigungsvorrichtung einen Träger umfasst, an dem die mindestens eine Klammer fixiert oder fixierbar ist, der an der Sprungschiene, Montageplatte oder insbesondere leitenden Montagefläche anordenbar ist. Zumindest zwei Klammern sind an dem Träger vorgesehen, wobei die Klammern quer zur Längsrichtung des Trägers versetzt angeordnet sind.

Aus der DE 299 06 078 U1 ist ein schraubenloser Halter für elektrische Leiter vorbekannt. Der schraubenlose Halter soll insbesondere für Leiter mit einem kreisrunden Querschnitt, insbesondere Blitzableiter, Verwendung finden, wobei ein Auflageteil vorgesehen ist, an dem sich der eingelegte Leiter abstützt, und mit vom Auflageteil abragenden federnden Krallen, deren freie Enden zum Auflageteil gerichtet sind und ein Widerlager für den eingelegten Leiter bilden.

Um eine axial unverschiebliche oder axial verschiebliche Anordnung des Leiters im Halter zu erreichen, sind vier Krallen kreuzweise zueinander angeordnet, die zwischen sich zwei einander kreuzende Einlage- oder Eindrückbereiche für einen Leiter begrenzen, wobei einer der Einlage- oder Eindrückbereiche so auf einen Leiterdurchmesser abgestimmt ist, dass der eingelegte Leiter axial unverschieblich von den Krallen gehalten ist. Der weitere Einlage- oder Eindrückbereich ist hingegen so auf den Durchmesser des Leiters abgestimmt, dass der eingelegte Leiter axial verschieblich gehalten werden kann. Vorzugsweise ist vorgesehen, dass jede Kralle einen etwa orthogonal vom Auflageteil abragenden Flachsteg und einen V-förmig zum Auflageteil abgewinkelten flachen Haltesteg aufweist. Bevorzugt ist darüber hinaus, dass jeweils zwei Krallen an einander gegenüberliegenden Rändern des Auflageteils angeordnet sind, wobei zwischen den jeweils benachbarten Krallen ein Einführspalt zu dem Leiter entsteht. Der Einführspalt zwischen den Krallen, insbesondere zwischen den vom Auflageteil abragenden Flachstegen oder Krallen ist um einen geringen Betrag größer als der Durchmesser des einzudrückenden Leiters. Jede Kralle weist an diesem dem eingelegten Leiter zugewandten Ende eine Kante auf, wobei eine Ecke der Kante von der Leiter-Auflagefläche des Auflageteils einen Abstand aufweist, der kleiner als der Leiterdurchmesser ist. Die weitere Ecke der Kante weist von der Leiter-Auflagefläche des Auflageteils einen Abstand auf, der gleich dem Leiterdurchmesser oder größer als der Leiterdurchmesser gewählt wird.

Bei einer Ausführungsform ist das Auflageteil samt Krallen einstückig als Blech-Stanz-Biegeteil ausgebildet und es besteht die Möglichkeit der Ausbildung einer auf den Halter samt eingelegtem Leiter aufsteckbaren, die Krallen abdeckende Schutzkappe, welche topfartig ausgebildet ist und am Auflageteil oder anderen Krallen verrastet werden kann. Die Schutzkappe kann diesbezüglich auch als Kennzeichnungsträger ausgebildet sein.

Die vorbekannte Lösung ermöglicht zwar das Halten und Kontaktieren eines Leiters mit rundem Querschnitt, wobei jedoch die Gefahr besteht, dass die Kontaktbereiche zwischen den Krallen und dem Leiter den Anforderungen bei einer Belastung durch Blitzstoßströme nicht genügen. Dieser Nachteil tritt insbesondere dann auf, wenn es sich bei dem elektrischen Leiter um einen Beton-Bewehrungsstahl handelt, welcher durch die typische Oberflächenstrukturierung keine glatte, elektrisch optimierte Oberfläche aufweist.

Bei dem Schnapphalter für einen Leiterdraht nach DE 198 17 061 C1 bilden Gehäuseteile eine Aufnahme zum Einlegen eines Leiterdrahts. Weiterhin sind Federschenkel vorhanden, die in Richtung zur Aufnahme weisende Krallen bilden. Ein Gehäuseunterbereich ist mit einem elektrisch leitenden Anschlussmittel, z.B. einer Schraube, versehen. Zur Verbesserung der Stromtragfähigkeit vom Leiterdraht zum Anschlussmittel wird ein elektrisch leitendes Kontaktstück in Richtung zum Gehäuseunterbereich elastisch nachgiebig ausgebildet. Durch das zusätzliche Kontaktstück, das sich an den Leiterdraht anschmiegt und das an die zusätzlichen Verbindungsmittel angeschlossen ist, wird die Fähigkeit des Schnapphalters, auch größere Ströme vom Leiterdreht zum Anschlussmittel zu leiten, verbessert. Die Ausbildung eines Gehäuseteils mit eingesetztem zusätzlichem, elastisch nachgiebig gelagertem Kontaktstück ist jedoch technologisch aufwendig und führt zu höheren Kosten. Die Aufnahme für den Leiterdraht, welche eine quasi geschlossene Mulde bildet, kann beim Einsatz derartiger Schnapphalter zum Zweck der Kontaktierung von Bewehrungen verschmutzen mit der Folge einer erheblich verschlechterten elektrischen Kontaktierung und damit verbundenen Störfällen.

Aus verschiedenen Untersuchungen und praktischen Anwendungen bekannter Schnapphalter hat es sich gezeigt, dass der Anschluss von Band- bzw. Rundmaterialien in Bewehrungen aufgrund der beengten Platzverhältnisse problematisch ist. Vorhandene Klemmen mit Schraubkontaktierungen können zwar recht feste und gut leitende Kontakte bilden, jedoch erfordert der Einsatz einer oder mehrerer Schrauben und deren Betätigung zusätzlichen Montageaufwand. Die Montage ist weiterhin dadurch erschwert, dass gleichzeitig Erdungsleiter, Klemmen sowie Montagewerkzeug gehandhabt werden müssen. Bekannte Klemmen zum Aufschnappen hingegen sind entweder herstellungsseitig zu aufwendig oder nicht in der Lage, die im Belastungsfall auftretenden Stoßströme sicher zu führen.

Aus dem Vorgenannten ist es daher Aufgabe der Erfindung, eine weiterentwickelte schraubenlose Klemmvorrichtung für elektrische Leiter, insbesondere Blitzschutz- oder Erdungsleiter mit gleicher oder unterschiedlicher Querschnittsfläche anzugeben, wobei die Klemmvorrichtung aus wenigen Teilen besteht und vorzugsweise als kostengünstiges Stanz-Biegeteil herstellbar ist. Im einfachsten Fall soll die Klemmvorrichtung aus lediglich zwei Teilen gefertigt sein, die z.B. einerseits einen Rundleiter und andererseits einen Flachleiter sicher kontaktieren und diese Leiter elektrisch verbinden können. Weiterhin ist es Aufgabe der Erfindung, die Klemmvorrichtung so auszugestalten, dass durch eine vielfältige Kombination von Klemmvorrichtungen, die sämtlich auf das Prinzip der Federklemmung zurückgreifen, unterschiedlichste Anwendungsfälle abdeckbar sind, ohne dass eine Vielzahl von Teilen vorrätig gehalten werden muss.

Die Lösung der Aufgabe der Erfindung erfolgt durch eine schraubenlose Klemmvorrichtung gemäß der Merkmalskombination des Anspruchs 1, wobei die Unteransprüche mindestens zweckmäßige Ausgestaltungen und Weiterbildungen umfassen.

Es wird demnach von einer schraubenlosen Klemmvorrichtung für elektrische Leiter ausgegangen. Hierbei kann es sich insbesondere um Blitzschutz- oder Erdungsleiter mit gleicher oder unterschiedlicher Querschnittsfläche, z.B. einer kreisrunden Querschnittsfläche oder einer rechteckigen Querschnittsfläche, d.h. um einen Flachleiter handeln.

Die schraubenlose Klemmvorrichtung kann auch als unmittelbares Verbindungsteil im Bereich des Blitzschutzes und der Erdung bzw. Schirmung eingesetzt werden, indem selbiges dazu dient, z.B. Bewehrungsmatten untereinander zu kontaktieren, wobei auf einen zusätzlichen Verbindungsdraht oder ein zusätzliches Verbindungsband verzichtet werden kann.

Ein erstes Klemmenteil der schraubenlosen Klemmvorrichtung besteht aus mindestens zwei gegenüberliegenden Federschenkeln aus einem elektrisch leitfähigen Material, wobei die gegenüberliegenden Federschenkel ein Federschenkelpaar bilden. Darüber hinaus weisen die Federschenkel eine Formgebung zum Aufnehmen und Kontaktieren eines Abschnitts des jeweiligen elektrischen Leiters auf. Darüber hinaus ist ein Verbindungsabschnitt zwischen den Federschenkeln vorgesehen. Erfindungsgemäß sind ein erstes Klemmenteil mit mindestens zwei Federschenkeln und ein zweites Klemmenteil mit mindestens zwei Federschenkeln vorgesehen, wobei die jeweiligen Verbindungsabschnitte zwischen den Federschenkeln Rücken an Rücken liegend verbindbar angeordnet sind.

Die Verbindung der Federschenkel bzw. Federschenkelpaare Rücken-an-Rücken kann kraft-, form- und/oder stoffschlüssig erfolgen.

Das erste Klemmenteil besteht erfindungsgemäß aus mindestens zwei beabstandeten, jeweils gegenüberliegenden Federschenkelpaaren, wobei der Verbindungsabschnitt sich ergänzend über den Abstandsraum zwischen den Federschenkelpaaren erstreckt. Dies bedeutet, dass zwei beabstandete Federschenkelpaare auf einer gemeinsamen Längsachse vorhanden sind, wobei sich der Verbindungsabschnitt über die Längsachse erstreckt.

Bei einer Ausführungsform des ersten Klemmenteils ist die Formgebung der Federschenkel kreisbogenartig oder in Form eines angenäherten V ausgebildet.

An dem dem Verbindungsabschnitt gegenüberliegenden Ende der Federschenkel weisen diese eine Abwinklung oder eine Kröpfung auf, die einerseits stabilitätserhöhend wirkt und zum anderen das Aufschnappen auf einen Leiter verbessert.

Zwischen den beabstandeten Federschenkelpaaren ist im Bereich des jeweils freien Endes des jeweiligen Federschenkels ein Stabilisierungssteg ausgebildet. Dieser Stabilisierungssteg verbindet jeweils die benachbarten, auf einer Seite befindlichen Federschenkel. Hierdurch ist eine ausreichende Steifigkeit der Klemmvorrichtung und die notwendige Flächenpressung bezogen auf den eingebrachten elektrischen Leiter gewährleistet.

Der Abstand der Federschenkel der Schenkelpaare und die Formgebung zur Aufnahme des jeweiligen Leiters ist an den Querschnitt des einzusetzenden Leiters angepasst, wobei Rücken-an-Rücken-Klemmenteile mit gleichem Abstand der Federschenkel, aber auch unterschiedlichem Abstand dieser kombinierbar sind. Bei einer derartigen Rücken-an-Rücken-Montage kann z.B. ein Leiter mit kleinerem Querschnitt mit Hilfe der Klemmvorrichtung mit einem Leiter größeren Querschnitts sicher elektrisch verbunden und kontaktiert werden.

Durch die wählbare Lageposition bei der Rücken-an-Rücken-Anordnung der Klemmenteile können sowohl parallel zueinander verlaufende Leiter kontaktiert werden als auch solche Leiter, die unter einem Winkel zueinander verlaufen.

Bei elektrischen Leitern mit ovalem oder kreisförmigem Querschnitt, insbesondere auch solchen Leitern, die einem üblichen Bewehrungsstahl mit Oberflächenstrukturierung entsprechen, besitzen die Federschenkel jeweils eine Formgebung eines angenäherten V, wobei hierdurch an den Berührungspunkten bzw. Berührungsflächen Kontaktzonen mit hoher Flächenpressung entstehen, so dass die gewünschte Blitzstoßstromtragfähigkeit unter allen Umständen gegeben ist.

Gemäß der Erfindung besteht das zweite Klemmenteil aus mindestens zwei, in einer Ebene liegenden, beabstandeten Federschenkeln, wobei in den Abstandsraum eine Federzunge eintaucht. Die Federzunge und die Federschenkel gehen in einen gemeinsamen Verbindungsabschnitt über, welcher als Abwinklung ausgebildet ist, wobei über die Abwinklung eine Rücken-an-Rücken-Verbindung von Klemmenteilen realisiert werden kann.

Bei dieser Ausführungsform erstreckt sich in einer bevorzugten Realisierung die Federzunge über einen ersten Längenabschnitt in der Ebene der Abwinklung, über einen zweiten Längenabschnitt in Richtung des freien Endes der Federschenkel und über einen dritten Längenabschnitt in Richtung der Ebene der Federschenkel.

Zwischen Federzunge und Federschenkel kann dann ein Flachleiter klemmend eingeführt und gehalten werden.

In Weiterbildung des zweiten Klemmenteils geht der dritte Längenabschnitt in eine Einführschräge für den Flachleiter über.

Die freien Enden der Federschenkel können bei einer Ausgestaltung des zweiten Klemmenteils eine Kröpfung aufweisen, um einen aufgenommenen Leiter teilweise zu umgreifen und gegen Herausdrücken zu fixieren.

Bei einer bevorzugten Ausgestaltung ist die Breite der Federschenkel jeweils gleich oder größer als die Breite der Federzunge gewählt.

Die Erfindung besteht aus einer Kombination von ersten Klemmenteilen gemäß der ersten Ausführungsform mit solchen zweiten Klemmenteilen nach der zweiten Ausführungsform. Hierdurch können also Leiter mit rundem oder ovalem Querschnitt elektrisch mit Flachleitern verbunden und kontaktiert werden.

In Weiterbildung der Erfindung kann das erster Klemmenteil gemäß einer Ausführungsform der Erfindung nach dem Aufschnappen auf den jeweiligen elektrischen Leiter mit einer deckelartigen Abdeckung komplettiert werden.

Die Abdeckung ist dabei so ausgebildet, dass diese die freien Enden der Federschenkelpaare umgreift.

In Weiterbildung besitzt die Abdeckung zwei gegenüberliegende Schenkel, welche in den Abstandsraum zwischen den Federschenkelpaaren eintauchen und mit einem Schenkelabschnitt den eingebrachten Leiter umgreifen.

Ein Vorteil der Erfindung besteht darüber hinaus in der Verwendung einer schraubenlosen Klemmvorrichtung gemäß Anspruch 1 zur Kontaktierung von Band- und/oder Rundbewehrungsmaterialien im Bereich des Blitzschutzes oder Erdung, wobei die Band- oder Rundbewehrungsmaterialien in Beton oder dergleichen Materialien vergossen werden.

Die Erfindung soll nachstehend anhand von Ausführungsbeispielen sowie unter Zuhilfenahme von Figuren näher erläutert werden.

Hierbei zeigen:
- Fig. 1a und 1b: verschiedene perspektivische Ansichten eines ersten Klemmenteilsmit zwei auf einer Längsachse liegenden Federschenkelpaaren, wobei jedes Federschenkelpaar aus zwei Federschenkeln besteht und wobei ein Stabilisierungssteg zwischen den beabstanderten Federschenkelpaaren im Bereich des jeweils freien Endes des jeweiligen Federschenkels vorgesehen ist;
- Fig. 2a und 2b: verschiedene perspektivische Ansichten eines zweiten Klemmenteilsder Klemmvorrichtung welches aus zwei, in einer Ebene liegenden beabstandeten Federschenkeln besteht, wobei in den Abstandsraum eine Federzunge eintaucht und die Federzunge und die Federschenkel in einen gemeinsamen Verbindungsabschnitt übergehen, welcher als Abwinklung ausgebildet ist, so dass über die Abwinklung eine Rückenan-Rücken-Montage bzw. Verbindung mehrerer derartiger Klemmenteile oder mit einem Klemmenteil gemäß den Fig. 1a und 1b erfolgen kann;
- Fig. 3a und 3b: nicht zur Erfindung gehörende Darstellungen einer Rückenan-Rücken-Montage von zwei Klemmenteilen gemäß den Fig. 2a und 2b ohne (Fig. 3a) und mit (Fig. 3b) aufgenommenen Flachleitern;
- Fig. 4a und 4b: die Darstellung einer Rücken-an-Rücken-Montage eines ersten Klemmteils mit Federschenkelpaaren und eines zweiten Klemmteils mit beabstandeten Federschenkeln und Federzunge, gegeneinander um 90° verdreht, zur Aufnahme sowohl eines Flachleiters als auch eines Rundleiters gemäß Fig. 4b;
- Fig. 4c und 4d: eine Darstellung ähnlich derjenigen nach Fig. 4a, jedoch mit paralleler Anordnung
- Fig. 5a und 5b: der Klemmenteile zur Aufnahme parallel verlaufender Rundleiter und Flachleiter (Fig. 4d); nicht zur Erfindung gehörende Darstellungen der Kombination und Rücken-an-Rücken-Montage von jeweils zwei Klemmenteilen mit Federschenkelpaaren und unterschiedlichen Ausformungen zur Aufnahme von Rundleitern unterschiedlicher Querschnitte, wie dies in Fig. 5b dargestellt ist;
- Fig. 6a und 6b: eine nicht zur Erfindung gehörende Darstellung einer Rücken-an-Rücken-Ausbildung von Klemmenteilen mit Ausformungen in den Federschenkelpaaren zur Aufnahme parallel verlaufender Rundleiter mit gleichem Querschnitt, wie dies in der Fig. 6b gezeigt ist, und
- Fig. 7: eine perspektivische Darstellung eines ersten Klemmenteils mit Federschenkelpaaren und aufgenommenem Rundleiter sowie einer deckelartigen Abdeckung zur Sicherung der Arretierung des Rundleiters im Klemmenteil.

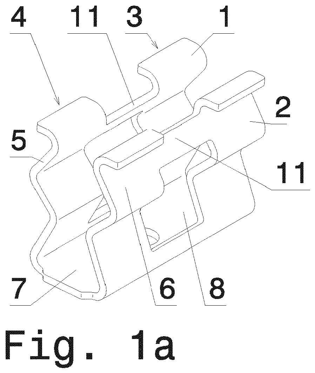

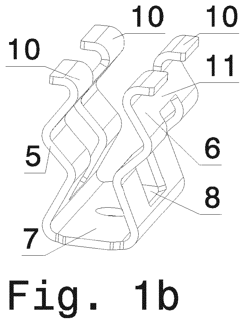

Bei der Darstellung gemäß den Fig. 1a und 1b ist ein erstes Klemmenteil mit zwei Federschenkeln 1; 2 gezeigt, wobei die Federschenkel 1; 2 ein erstes Federschenkelpaar 3 bilden.

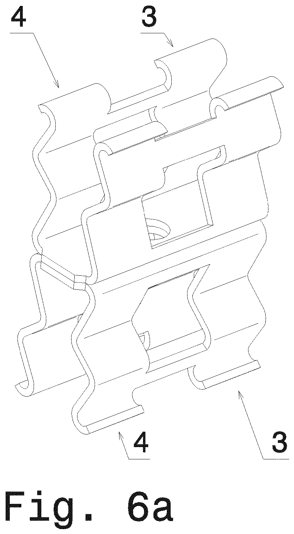

Ein zweites Federschenkelpaar 4 geht von den zu den Federschenkeln 1; 2 beabstandeten Federschenkeln 5; 6 aus. Zwischen den Federschenkeln 1; 2 und den Federschenkeln 5; 6 sind Verbindungsabschnitte 7 bzw. 8 vorhanden. Zwei wie in den Fig. 1a und 1b ausgebildete Klemmenteile können, wie in der Fig. 6a gezeigt, Rücken-an-Rücken verbunden werden, wobei diesbezüglich die Verbindungsabschnitte 7; 8 genutzt werden. Die Verbindungsabschnitte 7; 8 erstrecken sich in einem mittleren Bereich, wie in der Darstellung nach den Fig. 1a und 1b ersichtlich, auch über den Abstandsraum zwischen den Federschenkelpaaren 3; 4, so dass eine stabile Klemmenteilausbildung erhalten wird.

Die Formgebung der Federschenkel 5; 6 und 1; 2 ist, wie in der Fig. 1a und 1b gezeigt, an einen Rundleiter angepasst und weist die Gestalt eines V auf, was insbesondere bei der stirnseitigen Perspektivdarstellung nach Fig. 1b erkennbar ist.

An den dem Verbindungsabschnitt 7; 8 gegenüberliegenden Enden sind die Federschenkel jeweils mit einer Abwinklung in Form einer Biegung oder Kröpfung 10 versehen.

Zwischen den beabstandeten Federschenkelpaaren 3; 4 ist im Bereich des jeweils freien Endes des jeweiligen Federschenkels 1; 2 bzw. 5; 6 ein Stabilisierungssteg 11 ausgebildet.

Die Stabilisierungsstege 11 verbinden jeweils die benachbarten, auf einer Seite befindlichen Federschenkel 1; 5 bzw. 2; 6.

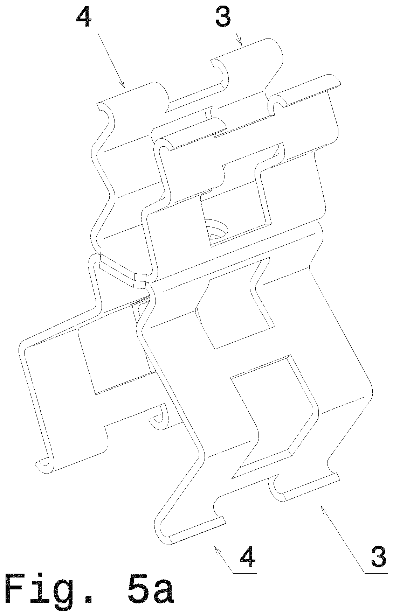

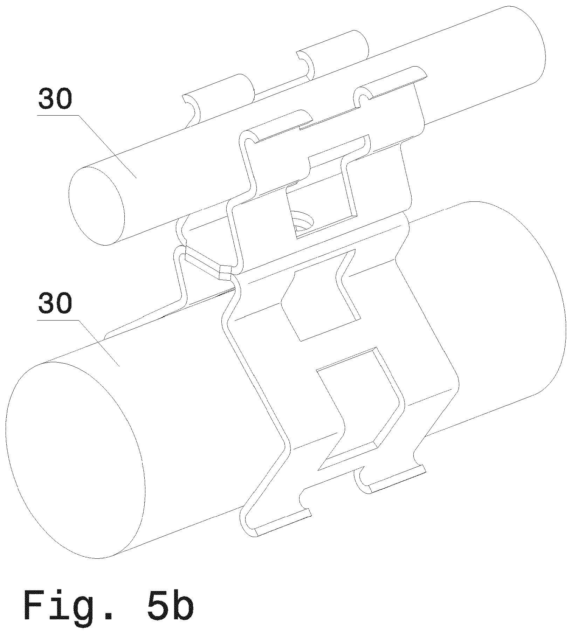

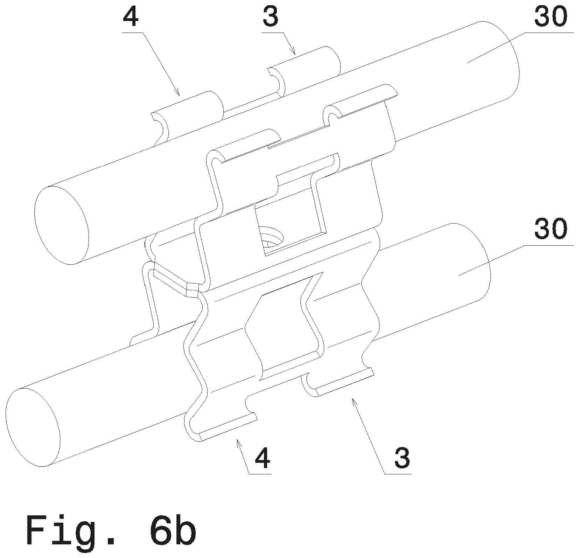

Der Abstand der Federschenkel 1; 2 bzw. 5; 6 der Schenkelpaare 3; 4 und die Formgebung zur Aufnahme des jeweiligen Leiters ist an den Querschnitt des entsprechenden Leiters angepasst. Es können Rücken-an-Rücken-Klemmenteile mit gleichem Abstand der Federschenkel, aber auch mit unterschiedlichem Abstand dieser kombiniert werden, wie dies in den Fig. 5a, 5b bzw. 6a und 6b dargestellt ist.

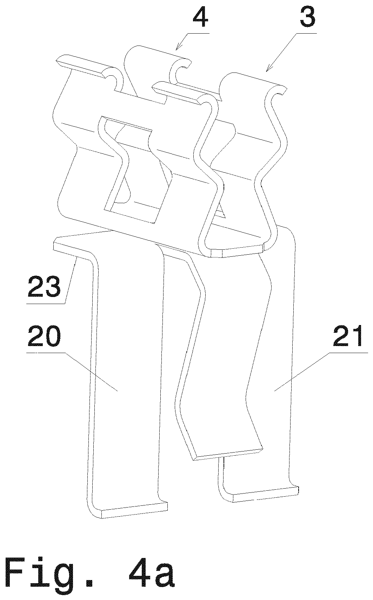

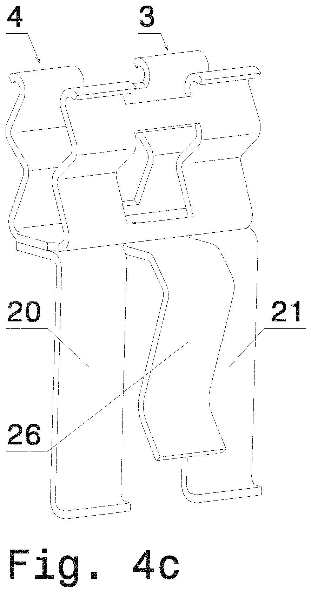

Die Rücken-an-Rücken-Verbindung kann stoffschlüssig, formschlüssig, aber auch kraftschlüssig erfolgen, wobei die Lageposition der Klemmenteile, wie in den Fig. 4a bis 4d gezeigt, zueinander beliebig gewählt werden kann.

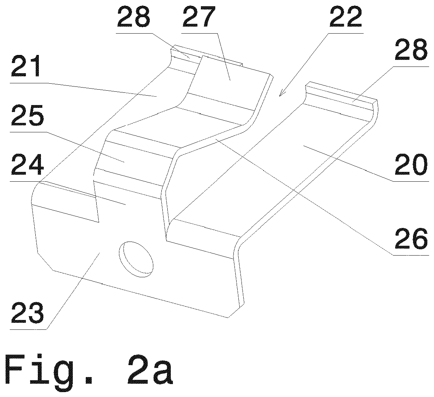

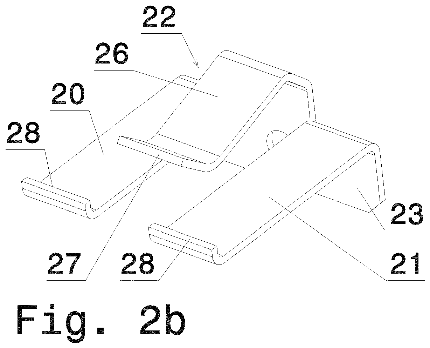

Das zweite Klemmenteil, wie in den Fig. 2a und 2b in verschiedenen Ansichten gezeigt, besteht aus mindestens zwei in einer Ebene liegenden beabstandeten Federschenkeln 20; 21, wobei in den Abstandsraum zwischen den Federschenkeln 20; 21 eine Federzunge 22 eintaucht, wobei die Federzunge 22 und die Federschenkel 20; 21 in einen gemeinsamen Verbindungsabschnitt 23 übergehen, welcher als Abwinklung ausgebildet ist. Über diese Abwinklung kann eine Rücken-an-Rücken-Verbindung von Klemmenteilen entweder der Ausführungsformen nach den Fig. 2a und 2b miteinander oder aber auch eine erfindungsgemäße

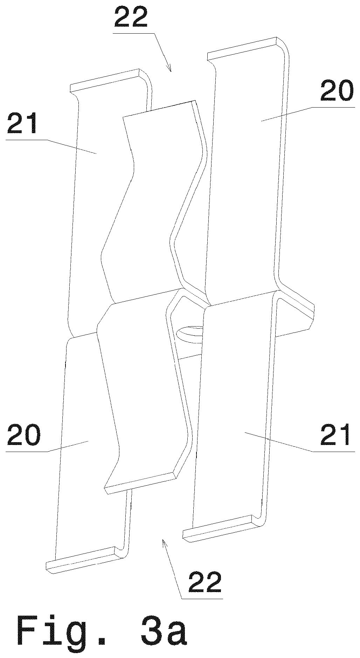

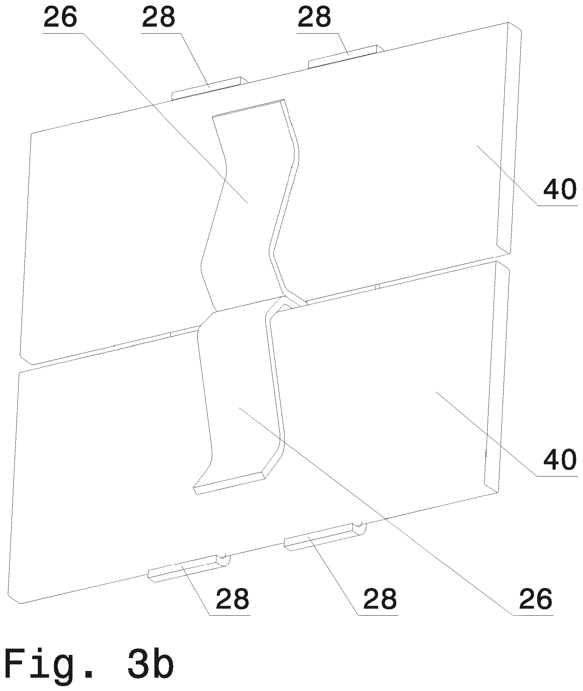

Kombination von jeweils einem Klemmenteil z.B. nach der Fig. 1a mit einem solchen Klemmenteil nach der Fig. 2b vorgenommen werden. Diese entsprechenden Kombinationsmöglichkeiten sind in den Fig. 3a und 3b sowie Fig. 4a bis 4d illustriert.

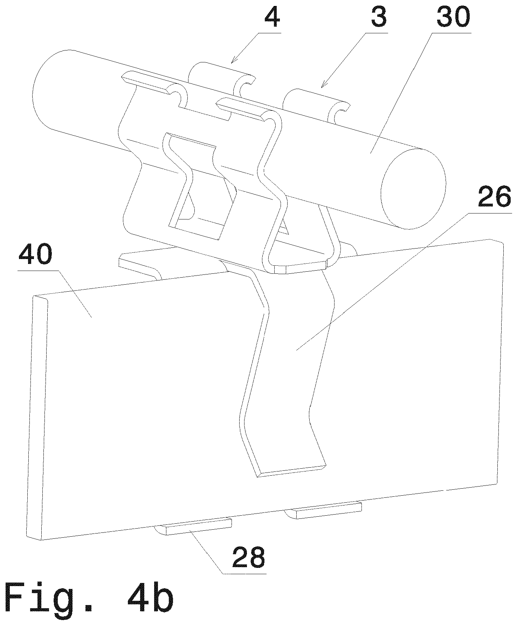

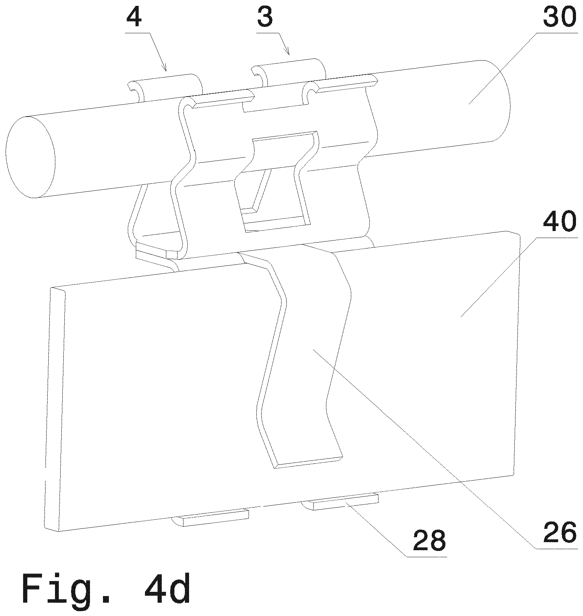

Die Federzunge 22 der Ausführung des Klemmenteils nach den Fig. 2a und 2b erstreckt sich über einen ersten Längenabschnitt 24 in der Ebene der Abwinklung 23, über einen zweiten Längenabschnitt 25 in Richtung des freien Endes der Federschenkel 20; 21 und über einen dritten Längenabschnitt 26 in Richtung der Ebene der Federschenkel 20; 21. Zwischen Federzunge 22 und den Federschenkeln 20; 21 kann ein Flachleiter klemmend eingeführt und gehalten werden, wie dies die Fig. 3b, 4b und 4d beispielhaft zeigen.

Der dritte Längenabschnitt 26 geht bei den Darstellungen nach den Fig. 2a und 2b in eine Einführschräge 27 für den Flachleiter über.

Die freien Enden der Federschenkel 20; 21 besitzen noch eine Kröpfung oder Abwinklung 28, um einen aufgenommenen Leiter teilweise zu umgreifen und zu fixieren. Dies wird aus den Darstellungen insbesondere nach den Fig. 3b, 4b und 4d erkennbar.

Die Breite der Federschenkel 20; 21 kann jeweils gleich oder größer als die Breite der Federzunge 22 gewählt werden. Bevorzugt ist die jeweilige Breite der Federschenkel 20; 21 größer als die Breite der Federzunge 22. Mithin kann die Federzunge 22 durch die Wahl ihrer Breite und im Übrigen durch die Auslegung der Dicke des entsprechenden Materials hinsichtlich der gewünschten Federeigenschaften und der Aufbiegbarkeit der Zunge optimiert werden, wobei hingegen die Federschenkel 20; 21 weniger nachgiebig realisiert werden können und über eine möglichst große Kontaktfläche bezogen auf den elektrischen Leiter verfügen (siehe hierzu die Darstellungen nach den Fig. 3b, 4b und 4d).

Wie bereits angedeutet, können die Klemmenteile gemäß der Grundkonfiguration nach den Fig. 1a; 1b und 2a; 2b untereinander, aber auch miteinander kombiniert werden, so dass sich die Anwendungsmöglichkeiten gemäß den Darstellungen nach den Fig. 3a bis 6b ergeben.

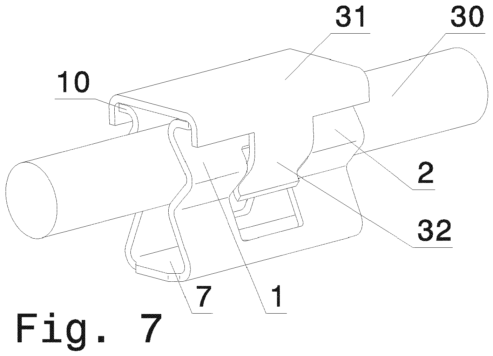

Wie in der Fig. 7 dargestellt, kann ein Klemmenteil gemäß den Darstellungen nach Fig. 1a und 1b nach dem Aufschnappen des jeweiligen elektrischen Leiters 30, in Fig. 7 ausgebildet als Rundleiter, noch mit einer deckelartigen Abdeckung 31 komplettiert werden.

Die Abdeckung 31 umgreift diesbezüglich die freien Enden der Federschenkelpaare 3; 4, und zwar insbesondere im Bereich der Abwinklungen oder Kröpfungen 10.

Die Abdeckung 31 weist bei einer Ausbildung zwei gegenüberliegende Schenkel 32 auf, welche in den Abstandsraum zwischen den Federschenkelpaaren 3; 4 eintauchen und mit einem Schenkelabschnitt den eingebrachten Leiter 30 mindestens teilweise umgreifen.

## Patentansprüche

1. Schraubenlose Klemmvorrichtung für Blitzschutz- oder Erdungsleiter mit unterschiedlicher Querschnittsfläche, bestehend aus einem ersten Klemmenteil, das ein erstes Federschenkelpaar (3) mit zwei gegenüberliegenden Federschenkeln (1; 2) und ein zweites Federschenkelpaar (4) mit zwei gegenüberliegenden Federschenkeln (5;6) aus elektrisch leitfähigem Material aufweist, wobei die Federschenkel (1; 2; 5; 6) eine Formgebung zum Aufnehmen und Kontaktieren eines Abschnitts eines elektrischen Leiters besitzen, sowie mit einem jeweiligen Verbindungsabschnitt (7; 8) zwischen den Federschenkeln des ersten und zweiten Federschenkelpaars (3; 4), wobei die Verbindungsabschnitte (7; 8) zwischen dem ersten und zweiten Federschenkelpaar (3; 4) für eine Rücken-an- Rücken-Verbindung mit einem zweiten Klemmenteil angeordnet sind,
**dadurch gekennzeichnet, dass**
sich die Verbindungsabschnitte (7; 8) sich über einen Abstandsraum zwischen dem ersten und zweiten Federschenkelpaar (3; 4) erstreckt, wobei die derart beabstandeten Federschenkelpaare (3; 4) auf einer gemeinsamen Längsachse liegen, weiterhin zwischen den beabstandeten Federschenkelpaaren (3;4) im Bereich des jeweils freien Endes des jeweiligen Federschenkels ein Stabilisierungssteg (11) ausgebildet ist, weicher die benachbarten, auf einer Seite befindlichen Federschenkel (1; 5 bzw. 2; 6) verbindet,
das zweite Klemmenteil der Klemmvorrichtung aus mindestens zwei, in einer Ebene liegenden,
beabstandeten Federschenkeln (20; 21) besteht, wobei in den Abstandsraum der Federschenkel (20; 21) eine aufbiegbare Federzunge (22) eintaucht, weiterhin die Federzunge (22) und die Federschenkel (20; 21) des zweiten Klemmenteils in einen gemeinsamen Verbindungsabschnitt (23) übergehen, welcher als Abwinklung ausgebildet und über diese Abwinklung die Rücken-an-Rücken-Verbindung vom ersten und zweiten Klemmenteil realisierbar ist.

2. Schraubenlose Klemmvorrichtung nach Anspruch 1, **dadurch gekennzeichnet, dass** sich die Federzunge (22) über einen ersten Längenabschnitt (24) in der Ebene der Abwinklung, über einen zweiten Längenabschnitt (25) in Richtung des freien Endes der Federschenkel (20; 21) und über einen dritten Längenabschnitt (26) in Richtung der Ebene der Federschenkel (20; 21) erstreckt.

3. Schraubenlose Klemmvorrichtung nach einem der Ansprüche 1 oder 2, **dadurch gekennzeichnet, dass** zwischen Federzunge (22) und Federschenkel (20; 21) ein Flachleiter (40) klemmend einführbar und gehalten ist.

4. Schraubenlose Klemmvorrichtung nach Anspruch 2 und 3, **dadurch gekennzeichnet, dass** der dritte Längenabschnitt (26) in eine Einführschräge (27) für den Flachleiter (40) übergeht.

5. Schraubenlose Klemmvorrichtung nach einem der Ansprüche 1 bis 4, **dadurch gekennzeichnet, dass** die freien Enden der Federschenkel (20; 21) eine Kröpfung (28) aufweisen, um einen aufgenommenen Leiter (40) teilweise zu umgreifen und zu fixieren.

6. Schraubenlose Klemmvorrichtung nach einem der Ansprüche 1 bis 5, **dadurch gekennzeichnet, dass** die Breite der Federschenkel (20; 21) jeweils gleich oder größer als die Breite der Federzunge (22) ist.

## Claims

1. Screwless clamping device for lightning protection conductors or earthing conductors of different crosssectional areas, consisting of a first clamping part, which has a first spring leg pair (3) having two opposite spring legs (1; 2) and a second spring leg pair (4) having two opposite spring legs (5; 6) of electrically conductive material, the spring legs (1; 2; 5; 6) having a shaping for receiving and contacting a portion of an electrical conductor, and having an connecting portion (7; 8) in each case between the spring legs of the first and second spring leg pair (3; 4), the connecting portions (7; 8) being arranged between the first and second spring leg pair (3; 4) for a back-to-back connection to a second clamping part,
**characterised in that**
the connecting portions (7; 8) extend over a space between the first and second spring leg pairs (3; 4), the spring leg pairs (3; 4) which are thus spaced apart lying on a shared longitudinal axis, furthermore a stabilising web (11) is formed between the spaced-apart spring leg pairs (3; 4) in the region of the free end of each spring leg and connects the adjacent spring leg (1; 5 or 2; 6) located on one side,
the second clamping part of the clamping device consists of at least two spaced-apart spring legs (20; 21) lying in a plane, a bendable spring tongue (22) penetrating into the space between the spring legs (20; 21), furthermore the spring tongue (22) and the spring leg (20; 21) of the second clamping part transition into a shared connecting portion (23) formed as an elbow, and the back-to-back connection of the first and second clamping parts can be implemented via this elbow.

2. Screwless clamping device according to claim 1, **characterised in that** the spring tongue (22) extends in the plane of the elbow over a first length portion (24), in the direction of the free end of the spring leg (20; 21) over a second length portion (25), and in the direction of the plane of the spring leg (20; 21) over a third length portion (26).

3. Screwless clamping device according to either claim 1 or claim 2, **characterised in that** a flat conductor (40) is insertable and held between the spring tongue (22) and the spring leg (20; 21) by clamping.

4. Screwless clamping device according to claims 2 and 3, **characterised in that** the third length portion (26) transitions into an insertion ramp (27) for the flat conductor (40).

5. Screwless clamping device according to any of claims 1 to 4, **characterised in that** the free ends of the spring legs (20; 21) have an offset (28) so as to grip around in part and fix a received conductor (40).

6. Screwless clamping device according to any of claims 1 to 5, **characterised in that** the width of the spring legs (20; 21) is less than or equal to the width of the spring tongue (22) in each case.

## Revendications

1. Dispositif de serrage sans vis pour des conducteurs de protection contre la foudre ou de mise à la terre ayant une surface de section transversale différente, constitué d'une première partie de serrage qui présente une première paire de branches élastiques (3) avec deux branches élastiques opposées (1; 2) et une deuxième paire de branches élastiques (4) avec deux branches élastiques opposées (5 ; 6) en matériau électriquement conducteur, les branches élastiques (1 ; 2 ; 5 ; 6) possédant une forme permettant de recevoir et de venir en contact avec une section d'un conducteur électrique, ainsi qu'avec une section de liaison respective (7 ; 8) entre les branches élastiques de la première et de la deuxième paire de branches élastiques (3 ; 4), les sections de liaison (7 ; 8) étant disposés entre la première et la deuxième paire de branches élastiques (3 ; 4) pour une liaison dos à dos avec une deuxième partie de serrage,
**caractérisé en ce que**
les sections de liaison (7 ; 8) s'étendent sur un espace d'écartement entre la première et la deuxième paire de branches élastiques (3 ; 4), les paires de branches élastiques (3 ; 4) ainsi espacées étant situées sur un axe longitudinal commun, une entretoise de stabilisation (11) étant en outre formée entre les paires de branches élastiques (3 ; 4) espacées dans la zone de l'extrémité libre respective de la branche élastique respective, laquelle relie les branches élastiques (1 ; 5, respectivement 2 ; 6) adjacentes se trouvant sur un côté, la deuxième partie de serrage du dispositif de serrage est constituée d'au moins deux branches élastiques (20 ; 21) espacées et situées dans un plan, une languette flexible pliable (22) pénétrant dans l'espace d'écartement des branches élastiques (20 ; 21), la languette flexible (22) et les branches élastiques (20 ; 21) de la deuxième partie de serrage se prolongeant par une section de liaison commune (23), qui est réalisé sous la forme d'une partie en équerre au moyen de laquelle la liaison dos à dos de la première et de la deuxième partie de serrage est réalisable.

2. Dispositif de serrage sans vis selon la revendication 1, **caractérisé en ce que** la languette flexible (22) s'étend sur une première section longitudinale (24) dans le plan de la partie en équerre, sur une deuxième section longitudinale (25) en direction de l'extrémité libre des branches élastiques (20 ; 21) et sur une troisième section longitudinale (26) en direction du plan des branches élastiques (20 ; 21).

3. Dispositif de serrage sans vis selon l'une des revendications 1 ou 2, **caractérisé en ce qu'**un conducteur plat (40) peut être introduit et est maintenu par serrage entre la languette flexible (22) et la branche élastique (20 ; 21) .

4. Dispositif de serrage sans vis selon les revendications 2 et 3, **caractérisé en ce que** la troisième section longitudinale (26) se prolonge par un biais d'introduction (27) pour le conducteur plat (40).

5. Dispositif de serrage sans vis selon l'une des revendications 1 à 4, **caractérisé en ce que** les extrémités libres des branches élastiques (20 ; 21) présentent un coudage (28) pour enserrer partiellement un conducteur (40) reçu et le fixer.

6. Dispositif de serrage sans vis selon l'une des revendications 1 à 5, **caractérisé en ce que** la largeur de chacune des branches élastiques (20 ; 21) est égale ou supérieure à la largeur de la languette flexible (22).
